# EUROPÄISCHE PATENTSCHRIFT

(11) **EP 0 583 683 B1**
(45) Veröffentlichungstag und Bekanntmachung des Hinweises auf die Patenterteilung: **13.03.1996**
(21) Anmeldenummer: 93112467.1
(22) Anmeldetag: 04.08.1993
(51) Int. Cl.: B01D 3/14

(54) **Destillatives Trennverfahren in diskontinuierlicher Betriebsweise**
Distillative separation process in a discontinuous method of operation
Procédé de séparations par distillation pour des modes de fonctionnement discontinus

(30) Priorität: 14.08.1992 DE 4226905
(43) Veröffentlichungstag der Anmeldung: 23.02.1994
(73) Patentinhaber: BASF Aktiengesellschaft, D-67063 Ludwigshafen (DE)
(72) Erfinder: Kaibel, Gerd, Dr., D-6840 Lampertheim (DE)

(56) Entgegenhaltungen:
- DE-C- 936 682
- PATENT ABSTRACTS OF JAPAN vol. 001, no. 009 (C-002) 17. März 1977 & JP-A-51 119 678 (KANSAI KAGAKU KIKAI SEISAKU KK) 20. Oktober 1976

## Beschreibung

Die Erfindung betrifft ein destillatives Trennverfahren in diskontinuierlicher Betriebsweise mittels einer Destillationsblase mit aufgesetzter Destillationskolonne.

Diskontinuierliche Trennprozesse mittels einer Destillationsblase mit aufgesetzter Destillationskolonne sind bekannt und in der Literatur in vielfältiger Art beschrieben, so beispielsweise in dem Lehrbuch "Thermische Trennverfahren" von K. Sattler, Ausgabe 1988, VCH Verlagsgesellschaft, Weinheim, Seiten 161-162.

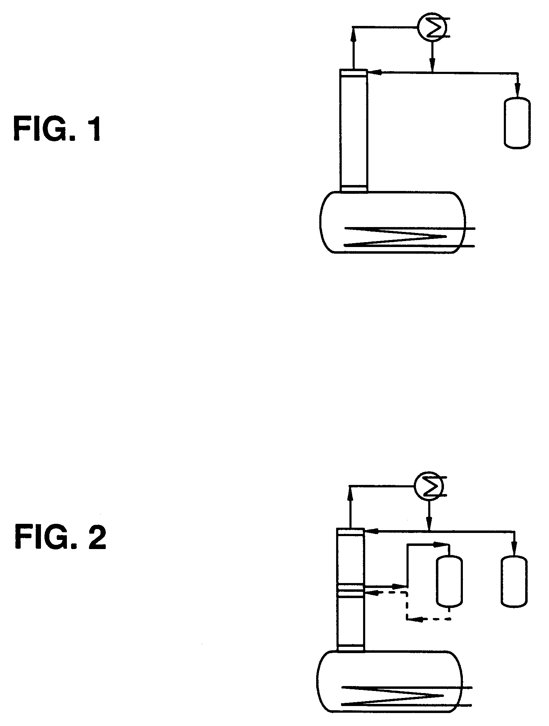

Bei der oben aufgezeichneten Durchführung der diskontinuierlichen Destillation trennt man die einzelnen Fraktionen in der Reihenfolge ihrer Flüchtigkeit nacheinander über Kopf ab, wobei man zwischen den einzelnen Fraktionen Teilmengen als Zwischenläufe entnimmt, die dann dem nächsten Destillationsansatz wieder zugegeben werden (siehe Figur 1). Dabei strebt man an, die einzelnen Fraktionen in zeitlich konstanter Konzentration bei allmählich ansteigendem Rücklaufverhältnis zu entnehmen, da dies verglichen mit einer Fahrweise unter zeitlich konstantem Rücklaufverhältnis deutliche spezifische Energieeinsparungen beziehungsweise höhere Kapazitäten ermöglicht.

Da diese Trennverfahren bezüglich Energiebedarf im Vergleich zu einer konventionellen Betriebsweise noch unbefriedigend sind, stellte sich die Aufgabe - insbesondere bei bestehenden Anlagen - die destillativen Trennverfahren zu optimieren.

Diese Aufgabe wird erfindungsgemäß dadurch gelöst, daß die Abtrennung einzelner Fraktionen in mindestens zwei unterschiedlichen Teilschritten erfolgt, wobei im ersten Teilschritt eine Teilmenge über Kopf oder als Seitenprodukt in einer Reinheit entnommen wird, die kleiner ist als die erforderliche Endreinheit dieser Fraktion, diese Teilmenge in einem oder mehreren Behältern zwischengespeichert wird, in einem weiteren Teilschritt diese Teilmenge aus dem Behälter bzw. den Behältern entnommen, der Kolonne im mittleren Bereich zugefahren und gleichzeitig Produkt in der erforderlichen Endreinheit am Kolonnenkopf gewonnen wird.

Bevorzugte Ausführungsformen dieses Verfahrens sind in den abhängigen Ansprüchen beschrieben.

Bei der Lösung der Aufgabe wurde gefunden, daß weitere Energieeinsparungen beziehungsweise Kapazitätserhöhungen möglich werden, wenn man die apparative Ausstattung der Destillationsanlage um einen Pufferbehälter ergänzt und die Abtrennung einer Fraktion, abgesehen von den bekannten Zwischenfraktionen, in mindestens 2 Teilschritte unterteilt.

Figur 2 zeigt die erfindungsgemäße Vogehensweise, bei der im ersten Teilschritt ein Teilstrom am Kolonnenkopf in der gewünschten Endreinheit gewonnen wird und gleichzeitig im mittleren Bereich der Kolonne ein Teilstrom in bevorzugt flüssiger Form in einer Reinheit entnommen wird, die zwischen der Sumpfkonzentration und der gewünschten Endreinheit liegt.

In einem nachfolgenden weiteren Teilschritt wird das in einem Behälter zwischengespeicherte Seitenprodukt wieder dem mittleren Bereich der Kolonne zugeführt, wobei gleichzeitig Kopfprodukt in der gewünschten Endreinheit gewonnen wird. Die Zufuhr des zwischengespeicherten Produktes erfolgt bevorzugt in zeitlich annähernd gleichbleibendem Mengenstrom.

Der zweite Teilschritt schließt sich bevorzugt unmittelbar an den ersten Teilschritt an. Es ist jedoch unter Inkaufnahme von Kapazitätseinbußen auch möglich, vor dem ersten und/oder zwischen dem ersten und dem zweiten und/oder nach dem zweiten Teilschritt konventionelle Destillationsphasen, bei denen nur Kopfprodukt entnommen wird, einzuschalten.

Die Dimensionierung und Auslegung der Apparate kann mit den üblichen Methoden der Ingenieurtechnik experimentell oder rechnerisch durch mathematische Modellbildung vorgenommen werden. Zur Erzielung günstiger Ergebnisse sind ausreichend hohe Trennstufenzahlen der Kolonne anzustreben.

Die Regelung der Kolonne kann mit gebräuchlichen Regelstrategien für diskontinuierlich betriebene Destillationskolonnen vorgenommen werden. Für die Rückeinspeisung des zunächst entnommenen Seitenprodukts empfiehlt sich ein zeitlich konstanter Mengenstrom.

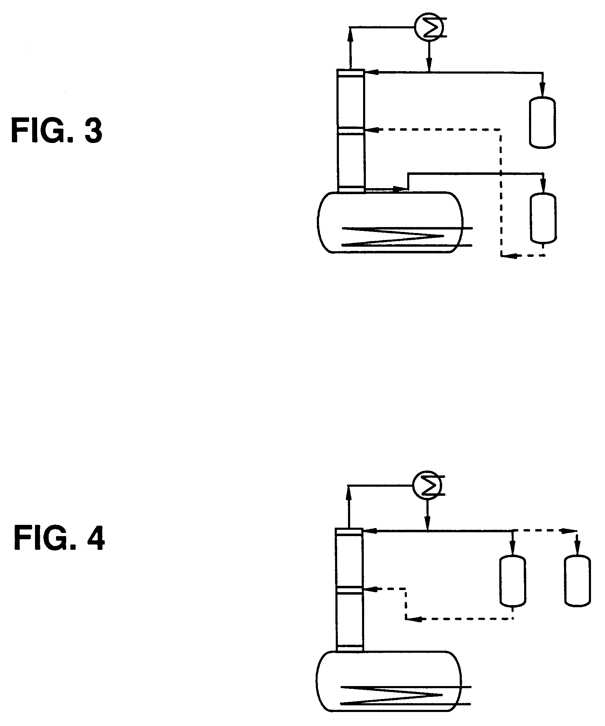

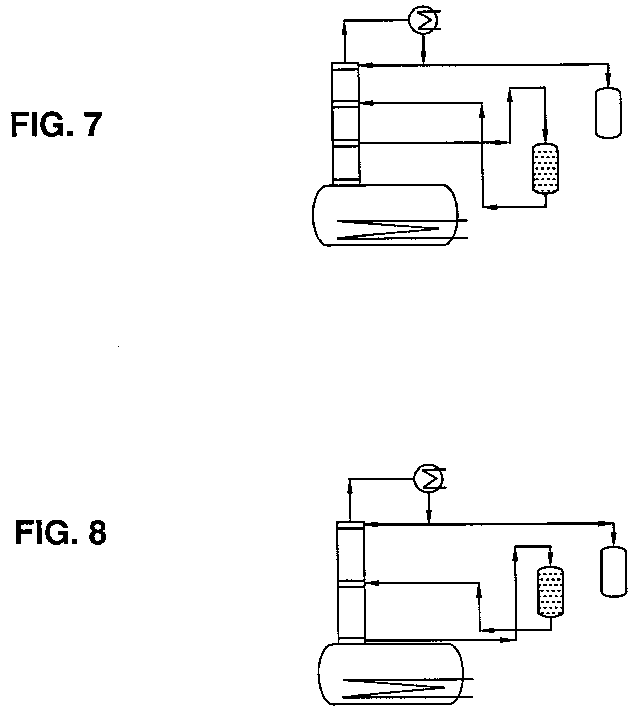

Figur 3 zeigt eine spezielle Ausgestaltung der erfindungsgemäßen Destillationsanordnung, bei der das Seitenprodukt nicht aus dem mittleren Kolonnenbereich, sondern vom untersten Kolonnenboden abgezogen wird. Die Wiedereinspeisung erfolgt jedoch ebenfalls im mittleren Kolonnenbereich. Diese spezielle Ausführung eignet sich bei niedrig gewählten Reinheiten für das zwischengespeicherte Seitenprodukt und speziell in Verbindung mit einer rückmischungsarmen Zwischenspeicherung des Seitenprodukts, wie sie weiter unten beschrieben wird (vgl. Figur 8).

Eine weitere Variante der vorliegenden Erfindung ist in Figur 4 dargestellt. Dabei verzichtet man im ersten Teilschritt auf die Gewinnung von Produkt in der gewünschten Endreinheit und entnimmt das Produkt mit der reduzierten Reinheit nicht im mittleren Bereich der Kolonne, sondern am Kolonnenkopf. In einem weiteren nachgeschalteten Teilschritt wird dieses Produkt wieder im mittleren Bereich der Kolonne in bevorzugt zeitlich konstantem Mengenstrom zugegeben und am Kolonnenkopf Produkt in der gewünschten Endreinheit gewonnen.

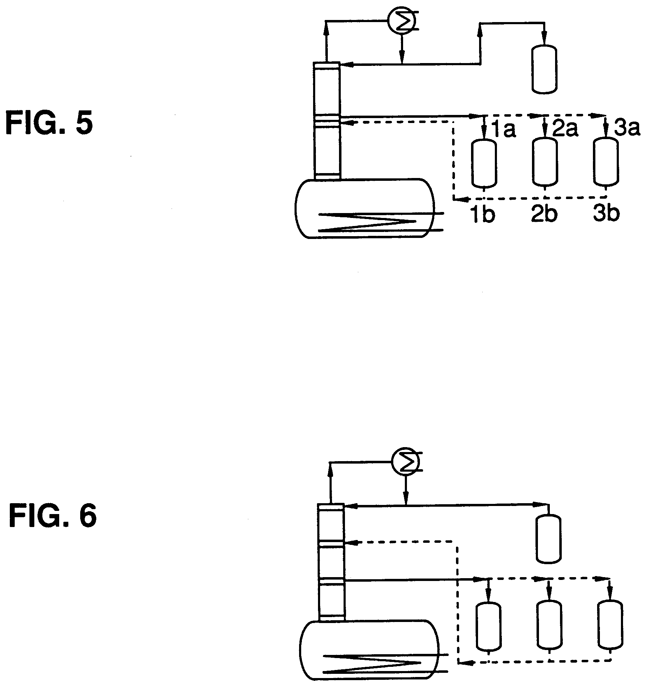

Zur Erzielung günstiger Ergebnisse empfiehlt es sich, Mischungsentropien bei der Zwischenpufferung zu vermeiden. Dies läßt sich dadurch erreichen, daß mit einer zeitlich konstanten Reinheit des Seitenprodukts gearbeitet wird. Unter Inkaufnahme eines höheren apparativen Aufwands kann man die Zwischenpufferung auf mehrere Behälter verteilen, wobei in der zeitlichen Abfolge zunächst Seitenprodukte mit höherem und später niedrigerem Leichtsiedergehalt gespeichert (Figur 5; 1 a, 2 a, 3 a) und später in derselben Reihenfolge wieder der Kolonne zugeführt werden. (Figur 5; 1 b, 2 b, 3 b). Zeitliche Überschneidungen sind möglich, indem Seitenprodukt mit niedriger Reinheit entnommen und gleichzeitig bereits gepuffertes Seitenprodukt mit höherer Reinheit wieder zugefahren wird, siehe Figur 6.

Eine besonders vorteilhafte und apparativ einfache Ausgestaltung einer vermischungsarmen Pufferung des Seitenproduktes zeigen Figur 7 und Figur 8. Hier wird nur ein Pufferbehälter benutzt, der durch spezielle Einbauten, wie z.B. Siebböden oder Füllkörper eine Rückvermischung des Seitenproduktes weitgehend unterdrückt. Anstelle des Behälters mit Einbauten sind auch alternative Anordnungen, wie Behälterkaskaden, möglich. Bei dieser Anordnung kann die Reinheit des Seitenproduktes zeitlich veränderlich sein. Der Pufferbehälter wird zunächst gefüllt und anschließend das zwischengespeicherte Produkt im mittleren Kolonnenbereich wieder eingespeist bei gleichzeitiger Seitenproduktentnahme.

Bei der Auftrennung temperaturempfindlicher Produkte kann das Seitenprodukt vor der Pufferung gekühlt und ggf. vor der Wiedereinspeisung erneut aufgeheizt werden. Bei Anordnungen, wie sie in den Figuren 6, 7 und 8 gezeigt sind, kann dies im Energieverbund geschehen.

Das Grundprinzip der vorliegenden Erfindung läßt sich vorteilhaft auch anwenden, wenn in der Destillationsblase und/oder in der Destillationskolonne chemische Reaktionen ablaufen, bei denen ein leichtsiedendes Reaktionsprodukt über Kopf abgetrennt wird. Als Beispiele seien hier vor allem Gleichgewichtsreaktionen, wie Veresterungen, Verseifungen, Umesterungen, Acetalbildungen und Acetalspaltungen genannt, bei denen durch Entfernung eines Reaktionsprodukts ein erhöhter Reaktionsumsatz erzielbar ist.

Die beschriebene erfindungsgemäße Vorgehensweise ermöglicht beträchtliche Energie-bzw. Zeiteinsparungen und dadurch Kapazitätssteigerung bei nur geringen Zusatzinvestitionen, die durch den Behälter für das zwischengespeicherte Produkt mit reduzierter Reinheit bedingt werden. Je nach Konzentrationsverhältnissen und Trennbarkeit sind Zeit- und Energieeinsparungen von etwa 30-50 % und dadurch Kapazitätserhöhungen von etwa 50-100 % erreichbar.

### Beispiel 1

Als Versuchsanordnung diente eine diskontinuierlich betriebene Destillationsapparatur im Labormaßstab, bestehend aus einer elektrisch beheizbaren Destillationsblase mit etwa 10 l Inhalt und einer aufgesetzten Destillationskolonne mit 50 mm Innendurchmesser, die mit Maschendrahtringen mit 5 mm Durchmesser gefüllt war. Es wurden 2 aufeinandergesetzte Kolonnenschüsse verwendet, die jeweils Füllkörperschüttungen von 1,2 m aufwiesen. Die theoretische Trennstufenzahl je Kolonnenschuß betrug ca. 30 Stufen. Die doppelwandigen Kolonnenschüsse waren zur Wärmeisolation evakuiert und verspiegelt. Zusätzlich wurden elektrisch beheizbare Heizmanschetten angebracht und die Temperatur zwischen der Außenwand der Kolonnenschüsse und den Heizmanschetten gemäß der Kolonneninnentemperatur nachgeregelt, um einen möglichst adiabaten Betrieb zu gewährleisten. Die Einstellung des Rücklaufverhältnisses am Kolonnenkopf sowie an der Seitenentnahmestelle zwischen den beiden Kolonnenschüssen erfolgte über einstellbare Schwenkrichter.

Die Kolonne wurde bei Normaldruck betrieben. Zu Beginn des Versuchs wurde in der Destillationsblase eine äquimolare Mischung bestehend aus 2,5 kg (25 mol) n-Heptan und 2,85 kg (25 mol) n-Octan vorgelegt. Die Apparatur wurde ohne Produktentnahme zunächst aufgeheizt und ab dem Zeitpunkt des Kondensatanfalls am Kolonnenkopf noch etwa 15 Minuten weiter bei unendlichem Rücklaufverhältnis betrieben. Die Heizleistung in der Destillationsblase wurde so geregelt, daß sich während des gesamten nachfolgenden Versuchs eine ungefähr gleich große Verdampfungsleistung ergab. Das Konstanthalten der Heizleistung wurde durch eine Messung des Differenzdrucks zwischen. der Destillationsblase und dem Kolonnenkopf kontrolliert.

Nach Erreichen eines annähernd stationären Zustands wurde begonnen, am Kopf der Kolonne sowie an der Seitenentnahme zwischen den beiden Kolonnenschüssen Produkt zu entnehmen. Die Regelung beider Entnahmemengen erfolgte von Hand. Die Entnahme von n-Heptan am Kolonnenkopf erfolgte so, daß die Temperatur in der Kolonne an einer Temperaturmeßstelle, die sich ca. 10 cm unterhalb des oberen Endes der Füllkörperschicht befand, möglichst konstant bei 98 °C gehalten wurde. Entsprechend erfolgte die Steuerung der Seitenentnahmemenge für die n-Heptan/n-Octan-Mischung über eine Temperaturmessung an der Seitenentnahmestelle zwischen den beiden Kolonnenschüssen. Die eingestellte Temperatur an der Seitenentnahme betrug 105 °C.

In der ersten Destillationsphase wurde gleichzeitig eine reine n-Heptanfraktion am Kolonnenkopf und eine verunreinigte Seitenentnahmefraktion entnommen. Am Kolonnenkopf fielen in dieser ersten Destillationsphase insgesamt 0,151 kg Produkt mit einer Reinheit von 99,9 % n-Heptan an. Das Kopfprodukt wurde in zeitlich etwa gleichbleibendem Mengenstrom abgezogen. Das Seitenprodukt fiel dagegen in zeitlich abnehmendem Mengenstrom an. Es wurden insgesamt 2,455 kg Seitenprodukt mit einem Gehalt von 67,0 % n-Heptan entnommen und in einem Vorlagegefäß zwischengespeichert.

Nach Beendigung der ersten Destillationsphase, die 188 Minuten dauerte, wurde das zwischengespeicherte Seitenentnahmeprodukt mit Hilfe einer Membranpumpe in zeitlich gleichbleibendem Mengenstrom innerhalb von 155 Minuten wieder auf Höhe der Seitenentnahmestelle in die Destillationskolonne zugefahren. In dieser Phase wurden am Kolonnenkopf insgesamt 2,201 kg Produkt mit einem Gehalt von 99,9 % n-Heptan entnommen. Das Kopfprodukt fiel in der zweiten Destillationsphase ebenfalls in etwa zeitlich gleichbleibendem Mengenstrom an.

Für die Abtrennung von insgesamt 2,352 kg Kopfprodukt in den beiden Destillationsphasen wurde eine Gesamtzeit von 343 Minuten benötigt.

### Beispiel 2

Die Versuchsanordnung war die gleiche wie in Beispiel 1.

Während der ersten Destillationsphase wurde die Temperatur an der Seitenentnahmestelle jedoch höher auf 107 °C gehalten. In dieser Phase wurden am Kolonnenkopf 0,403 kg n-Heptan mit einer Reinheit von 99,9 % in zeitlich abnehmendem Mengenstrom abgezogen. Es fielen insgesamt 2,508 kg Seitenprodukt mit einem Gehalt von 51,8 % n-Heptan an. Zu Beginn der ersten Destillationsphase konnte die gesamte an der Seitenentnahmestelle anfallende Flüssigkeitsmenge als Seitenprodukt abgezogen werden. Die erste Destillationsphase dauerte 121 Minuten.

Das Seitenprodukt wurde in der zweiten Destillationsphase innerhalb von 155 Minuten wieder zugefahren. Das Kopfprodukt (1,949 kg) mit einer Reinheit von 99,9 % fiel in zeitlich annähernd konstantem Mengenstrom an.

Während der beiden Destillationsphasen wurden insgesamt 2,352 kg Kopfprodukt innerhalb von insgesamt 276 Minuten abgetrennt.

### Beispiel 3 (Vergleichsbeispiel zur konventionellen Destillation):

Es wurde die Versuchsanordnung wie in den vorstehend beschriebenen Beispielen benutzt. Seitenprodukt wurde jedoch nicht entnommen.

Die Konzentration des Kopfproduktes betrug wie in den Vergleichsversuchen 99,9 % n-Heptan. Zur Abtrennung von 2,352 kg Kopfprodukt wurde eine Destillationszeit von 440 Minuten benötigt.

## Patentansprüche

1. Destillatives Trennverfahren in diskontinuierlicher Betriebsweise mittels einer Destillationsblase mit aufgesetzter Destillationskolonne dadurch gekennzeichnet, daß die Abtrennung einzelner Fraktionen in mindestens zwei unterschiedlichen Teilschritten erfolgt, wobei im ersten Teilschritt eine Teilmenge über Kopf oder als Seitenprodukt in einer Reinheit entnommen wird, die kleiner ist als die erforderliche Endreinheit dieser Fraktion, diese Teilmenge in einem oder mehreren Behältern zwischengespeichert wird, in einem weiteren Teilschritt diese Teilmenge aus dem Behälter bzw. den Behältern entnommen, der Kolonne im mittleren Bereich zugefahren und gleichzeitig Produkt in der erforderlichen Endreinheit am Kolonnenkopf gewonnen wird.

2. Verfahren nach Anspruch 1, dadurch gekennzeichnet, daß in der Destillationsblase und/oder der Destillationskolonne während des Destillationsvorgangs zumindest zeitweise eine chemische Reaktion abläuft.

3. Verfahren nach den Ansprüchen 1 und 2, dadurch gekennzeichnet, daß die im ersten Teilschritt entnommene Menge regelungstechnisch bevorzugt so gesteuert wird, daß sich eine zeitlich konstante Konzentration dieser Menge ergibt bzw. bei Verwendung mehrerer Behälter für die Zwischenspeicherung abschnittsweise zeitlich konstante Konzentrationen sich einstellen.

4. Verfahren nach den Ansprüchen 1 bis 3, dadurch gekennzeichnet, daß die Wiederzufuhr der im ersten Teilschritt entnommenen Menge im darauffolgenden zweiten Teilschritt bevorzugt in zeitlich annähernd konstantem Mengenstrom so erfolgt, daß sich ein zeitlich konstanter Entnahmestrom am Kolonnenkopf ergibt.

5. Verfahren nach den Ansprüchen 1 bis 4, dadurch gekennzeichnet, daß die an den Seitenentnahmen abgezogenen Produkte mit reduzierter Reinheit bevorzugt rückmischungsarm kontinuierlich gepuffert und wieder eingespeist werden, wobei die Konzentration der Seitenentnahmen bevorzugt zeitlich kleiner wird und die Widereinspeisungsstelle in der Kolonne höher liegt als die Seitenentnahmestelle.

6. Verfahren nach den Ansprüchen 1 bis 5, dadurch gekennzeichnet, daß anstelle einer einzigen Seitenentnahme mehrere Seitenentnahmen in bevorzugt zeitlich konstanter Konzentration vorgenommen werden, wobei die Konzentrationsanteile an der leichtsiedenden Komponente in den einzelnen Seitenentnahmen von unten nach oben ansteigen und die in den Seitenentnahmen zunächst entnommenen Produktmengen anschließend wieder der Kolonne bevorzugt getrennt zugegeben werden.

7. Verfahren nach den Ansprüchen 1 bis 6, dadurch gekennzeichnet, daß die einzelnen Seitenentnahmen zeitlich aufeinanderfolgend von unten nach oben in Betrieb genommen werden und anschließend ebenfalls zeitlich aufeinanderfolgend von unten nach oben die Seitenentnahmen beendet und die jeweils entnommenen Produktmengen wieder der Kolonne bevorzugt getrennt zugegeben werden.

8. Verfahren nach den Ansprüchen 1 bis 7, dadurch gekennzeichnet, daß zusätzlich zu einer oder mehreren Seitenentnahmen auch am Kolonnenkopf Produkt mit reduzierter Reinheit entnommen wird, wobei das am Kolonnenkopf entnommene Produkt im zweiten Teilschritt nicht am Kolonnenkopf, sonden in die Kolonne eingespeist wird.

9. Verfahren nach den Ansprüchen 1 bis 8, dadurch gekennzeichnet, daß die Wiederzufuhr der Seitenentnahmeprodukte auf dem gleichen Boden bzw. auf der gleichen Höhe der Kolonne erfolgt wie die jeweilige Entnahme.

10. Verfahren nach den Ansprüchen 1 bis 9, dadurch gekennzeichnet, daß die Wiederzufuhr der Seitenentnahme zumindest teilweise auf höher liegenden Stellen erfolgt als die jeweiligen Entnahmen, entsprechend der jeweils optimalen Lage für einen Zulaufboden in Abhängigkeit von der zu diesem Zeitpunkt vorliegenden Konzentration in der Destillationsblase und der Trennleistung der Kolonne.

11. Verfahren nach den Ansprüchen 1 bis 10, dadurch gekennzeichnet, daß in der Anfangsphase der einzelnen diskontinuierlich abgetrennten Fraktionen durch die Dimensionierung des Kolonnenquerschnitts, durch die eingebrachte Heizleistung und durch die konstruktive Ausgestaltung der apparativen Anordnung gezielt ein hydrodynamischer Belastungsbereich eingestellt wird, bei dem ausgehend vom Kolonnensumpf Flüssigkeitsanteile in zeitlich abnehmender Menge mit dem Brüdenstrom mitgerissen werden und diese Mengenanteile im ersten Teilschritt somit in die Seitenentnahmemengen gelangen.

12. Verfahren nach den Ansprüchen 1 bis 11, daurch gekennzeichnet, daß in der Anfangsphase des ersten Teilschritts an der untersten Seitenentnahmestelle soviel Produkt flüssig entnommen wird, daß zwischen der untersten Seitenentnahme und der Destillationsblase kein Flüssigkeitsstrom, sondern nur ein Brüdenstrom vorliegt.

13. Verfahren nach den Ansprüchen 1 bis 12, dadurch gekennzeichnet, daß die Seitenentnahme bevorzugt in flüssiger Form erfolgt.

14. Verfahren nach den Ansprüchen 1 bis 13, dadurch gekennzeichnet, daß die Wiederzugabe der Seitenentnahmemengen bevorzugt in flüssiger Form erfolgt.

15. Verfahren nach den Ansprüchen 1 bis 14, dadurch gekennzeichnet, daß die Wiederzugabe der Seitenentnahmemenge dampfförmig oder teilweise dampfförmig erfolgt, wobei für diese Energiezufuhr ein Heizmedium genutzt wird, welches ein tieferes Temperaturniveau aufweist als das Heizmedium in der Destillationsblase.

16. Verfahren nach den Ansprüchen 1 bis 15, dadurch gekennzeichnet, daß die an den Seitenentnahmen und/oder am Kolonnenkopf entnommenen Produkte mit reduzierter Reinheit zur Verringerung de thermischen Schädigung vor ihrer Speicherung in Pufferbehältern gekühlt werden und vor ihrer Rückeinspeisung in die Kolonne gegebenenfalls wieder erhitzt werden.

## Claims

1. A batchwise distillative separation process by means of a distillation still with an attached distillation column, wherein the separation of individual fractions is effected in at least two different steps, where, in the first step, a portion is removed via the top or as a side product in a purity which is lower than the required final purity of this fraction and this portion is temporarily stored in one or more containers and, in a further step, this portion is removed from the container or the containers and fed to the column in the middle region and at the same time product is obtained in the required final purity at the top of the column.

2. A process as claimed in claim 1, wherein a chemical reaction takes place at least temporarily in the distillation still and/or the distillation column during the distillation process.

3. A process as claimed in claims 1 and 2, wherein the amount removed in the first step is preferably controlled so that there is a concentration of this amount which is constant as a function of time or, where a plurality of containers are used for the intermediate storage, concentrations which are constant as a function of time occur in each section.

4. A process as claimed in any of claims 1 to 3, wherein recycling of the amount removed in the first step in the subsequent second step is preferably effected at a virtually constant flow rate as a function of time so that a constant take-off flow rate as a function of time occurs at the top of the column.

5. A process as claimed in any of claims 1 to 4, wherein the products of lower purity which are removed at the side take-off points are preferably temporarily stored continuously and with little back-mixing and are recycled, the concentration of the side streams preferably decreasing as a function of time and the recycling point in the column being located higher than the side take-off point.

6. A process as claimed in any of claims 1 to 5, wherein there is a plurality of side streams, preferably with a concentration which is constant as a function of time, instead of a single side stream, the concentrations of the low-boiling component in the individual side streams increasing from bottom to top and the amounts of products initially removed in the side streams subsequently being recycled to the column, preferably separately.

7. A process as claimed in any of claims 1 to 6, wherein the individual side streams are operated in succession from bottom to top and thereafter the side streams are terminated, likewise in succession from bottom to top, and the particular amounts of products removed are recycled to the column, preferably separately.

8. A process as claimed in any of claims 1 to 7, wherein, in addition to one or more side streams, product of lower purity is also removed at the top of the column, the product removed at the top of the column being fed in not at the top of the column but into the column in the second step.

9. A process as claimed in any of claims 1 to 8, wherein the side products are recycled to the same tray or to the same height of the column as the particular take-off.

10. A process as claimed in any of claims 1 to 9, wherein the side stream is recycled at least partly to points which are located higher than the particular take-off points, corresponding to the optimum position in each case for a feed tray, depending on the concentration at this time in the distillation still and on the separation efficiency of the column.

11. A process as claimed in any of claims 1 to 10, wherein, in the initial phase of the individual fractions separated off batchwise, a hydrodynamic load range is established by means of the dimensioning of the column cross-section, the heating power applied and the design of the apparatus, in which load range, starting from the bottom of the column, amounts of liquid in an amount decreasing as a function of time are entrained with the vapor stream and these portions thus enter the side streams in the first step.

12. A process as claimed in any of claims 1 to 11, wherein, in the initial phase of the first step, liquid product is removed at the lowermost side take-off point in an amount such that, instead of a liquid stream, only a vapor stream is present between the lowermost side take-off point and the distillation still.

13. A process as claimed in any of claims 1 to 12, wherein the side stream is preferably taken off in liquid form.

14. A process as claimed in any of claims 1 to 13, wherein the side streams are preferably recycled in liquid form.

15. A process as claimed in any of claims 1 to 14, wherein the side stream is recycled completely or partially in vapor form, a heating medium which has a lower temperature level than the heating medium in the distillation still being used for this energy supply.

16. A process as claimed in any of claims 1 to 15, wherein the products of lower purity removed at the side take-off points and/or at the top of the column are cooled to reduce the thermal damage before they are stored in buffer containers, and, if required, are heated again prior to being recycled to the column.

## Revendications

1. Procédé de séparation par distillation en mode d'exploitation discontinue à l'aide d'un alambic ou matras de distillation surmonté d'une colonne de distillation, caractérisé en ce que la séparation des fractions individuelles s'effectue en au moins deux étapes partielles différentes, où au cours de la première étape partielle, on prélève une quantité partielle en tête ou sous forme de produit latéral, avec une pureté qui est inférieure à la pureté finale nécessaire de cette fraction, on entrepose de manière intermédiaire cette quantité partielle dans un ou plusieurs récipients, au cours d'une autre étape partielle, on prélève cette quantité partielle à partir du ou des récipients, on l'envoie dans la partie médiane de la colonne et on prélève simultanément du produit à la pureté finale exigée en tête de la colonne.

2. Procédé suivant la revendication 1, caractérisé en ce qu'une réaction chimique se déroule au moins temporairement pendant le processus de distillation dans l'alambic ou le matras de distillation et/ou la colonne de distillation.

3. Procédé suivant les revendications 1 et 2, caractérisé en ce que la quantité prélevée au cours de la première étape partielle est de préférence commandée ou guidée par régulation technique en une manière telle que l'on obtienne une concentration constante dans le temps de cette quantité, ou bien que, lors de l'utilisation de plusieurs récipients pour l'entreposage intermédiaire, périodiquement des concentrations constantes dans le temps s'établissent.

4. Procédé suivant les revendications 1 à 3, caractérisé en ce que le renvoi de la quantité prélevée au cours de la première étape partielle dans la seconde étape partielle subséquente s'effectue de préférence en un courant quantitatif pratiquement constant dans le temps, en une manière telle que l'on parvienne à un courant de prélèvement constant dans le temps en tête de la colonne.

5. Procédé suivant les revendications 1 à 4, caractérisé en ce que les produits soutirés aux prélèvements latéraux à pureté réduite sont de préférence continuellement tamponnés à l'aide d'un bras de mélange en retour et réinjectés, où la concentration des prélèvements latéraux diminue de préférence dans le temps et l'endroit de réinjection dans la colonne se situe plus haut que l'endroit de prélèvement latéral.

6. Procédé suivant les revendications 1 à 5, caractérisé en ce qu'au lieu d'un seul prélèvement latéral, on entreprend plusieurs prélèvements latéraux, de préférence, en concentration constante dans le temps, où les fractions de concentration en composants à bas point d'ébullition dans les prélèvements latéraux individuels s'élèvent du bas vers le haut et les quantités de produits que l'on prélève d'abord dans les prélèvements latéraux sont ensuite réenvoyés de préférence séparément dans la colonne.

7. Procédé suivant les revendications 1 à 6, caractérisé en ce que les prélèvements latéraux individuels sont entrepris successivement dans le temps et on arrête ensuite également successivement dans le temps les prélèvements latéraux du bas vers le haut et on renvoie de préférence séparément les quantités de produit à chaque fois prélevées dans la colonne.

8. Procédé suivant les revendications 1 à 7, caractérisé en ce que, complémentairement à un ou plusieurs prélèvements latéraux, on prélève également, en tête de la colonne, du produit à pureté réduite, où le produit prélevé en tête de la colonne est injecté dans la seconde étape partielle, non en tête de la colonne, mais bien dans la colonne.

9. Procédé suivant les revendications 1 à 8, caractérisé en ce que le renvoi de produits de prélèvement latéral au même plateau ou à la même hauteur de la colonne s'effectue comme le prélèvement concerné.

10. Procédé suivant les revendications 1 à 9, caractérisé en ce que le renvoi du prélèvement latéral s'effectue au moins partiellement à des endroits se trouvant plus haut que les prélèvements concernés, correspondant à la situation à chaque fois optimale pour un plateau d'addition en fonction de la concentration présente en ce moment dans l'alambic ou matras de distillation et du pouvoir séparateur de la colonne.

11. Procédé suivant les revendications 1 à 10, caractérisé en ce que, dans la phase de début ou initiale des fractions individuelles et séparées en continu, on établit un domaine de charge hydrodynamique voulu par le dimensionnement de la section transversale de la colonne, par la puissance de chauffe appliquée et par la forme de construction de l'appareillage, conformément auquel, partant du fond de la colonne, des fractions de liquide sont entraînées avec le courant de vapeurs en quantité décroissant dans le temps et ces fractions quantitatives parviennent dans la première étape partielle et ainsi dans les prélèvements latéraux.

12. Procédé suivant les revendications 1 à 11, caractérisé en ce que, dans la phase initiale ou de début de la première étape partielle, on prélève à l'endroit de prélèvement le plus bas, tant de produit à l'état liquide qu'entre le prélèvement latéral le plus bas et le matras ou l'alambic de distillation ne se présente plus de courant de liquide, mais bien plutôt seulement un courant de vapeurs.

13. Procédé suivant les revendications 1 à 12, caractérisé en ce que le prélèvement latéral se réalise, de préférence, sous forme liquide.

14. Procédé suivant les revendications 1 à 13, caractérisé en ce que la réintroduction des prélèvements latéraux s'effectue, de préférence, sous forme liquide.

15. Procédé suivant les revendications 1 à 14, caractérisé en ce que la réintroduction de la quantité de prélèvement latéral s'effectue sous forme de vapeur ou partiellement sous forme de vapeur, où pour cet apport d'énergie, on utilise un milieu de chauffage qui présente un niveau de température plus bas que le milieu de chauffage dans le matras ou l'alambic de distillation.

16. Procédé suivant les revendications 1 à 15, caractérisé en ce que les produits à pureté réduite soutirés aux prélèvements latéraux et/ou en tête de la colonne sont refroidis en vue de réduire l'endommagement thermique avant leur entreposage dans des réservoirs tampon et sont éventuellement rechauffés avant leur réinjection dans la colonne.
